# EUROPEAN PATENT APPLICATION

(11) **EP 1 150 231 A1**
(43) Date of publication of application: **31.10.2001**
(21) Application number: 01110448.6
(22) Date of filing: 27.04.2001
(51) Int. Cl.: G06F 17/60

(54) **Corporate rating system and corporate rating method**

(30) Priority: 28.04.2000 JP 2000128860
(71) Applicant: NEC CORPORATION, Tokyo (JP)
(72) Inventor: Kinoshita, Haruhiko, Tokyo (JP)
(74) Representative: Betten & Resch

(57) **Abstract**

In a corporate rating system in which a corporate rating business entity, an enterprise desiring its own corporate rating, and an application service provider (ASP) are mutually electrically connected, via a communication circuit, business information indicating general business activities, such as financial, accounting, and tax information in each such enterprise is stored in the ASP for each enterprise individually. The corporate rating business entity has it own proprietary corporate rating software, and obtains required information from the ASP regarding an enterprise desiring a corporate rating, and uses its corporate rating software to perform a corporate rating with respect to each enterprise.

## Description

### BACKGROUND OF THE INVENTION

### 1. Field of the Invention

The present invention relates to a corporate rating system and a corporate rating method, and more particularly to a corporate rating system and a corporate rating method whereby a corporate rating service can be provide with respect to a specific enterprise, via a communication circuit such as the Internet.

### 2. Description of Related Art

In the past, in the case in which a company, a group or other corporate rating business entity performs a corporate rating of a specific enterprise, the corporate rating business entity itself must use some type of computer network, documents, or the telephone and the like to obtain required with regard to the specific enterprise, or obtain disclosure documents that the specific enterprise issues at a specific time, such as a stock report, a financial report, an accounting report, or a tax report or the like, in order to obtain the required information, or else a worker from the corporate rating business entity visits the specific enterprise to obtain the required information, and, based on information with regard to the specific enterprise, the corporate rating business entity uses its proprietary corporate rating method software to perform a rating of the specific enterprise.

In the above-noted information collection method, however, the information available for use as a reference by the corporate rating business entity at the time of announcing the corporate rating is limited to information that the specific enterprise has made public, and information disclosed to the corporate rating business entity by the specific enterprise.

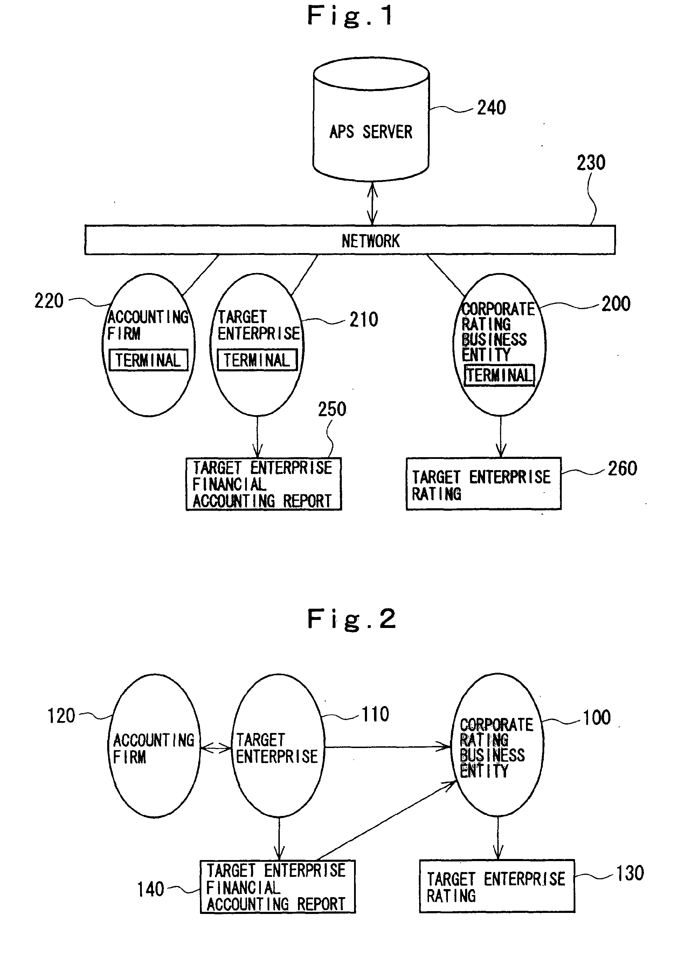

Fig. 2 of the accompanying drawings is a block diagram illustrating the general method of performing a corporate rating based on information the corporate rating business entity from a specific enterprise in the past. As is clear from this drawing, in order for corporate rating business entity 100 to determine a rating 130 of a target enterprise, the corporate rating business entity collects information such as a financial accounting report 140 already issued by the target enterprise 110, a financial accounting report 150 already issued by the target enterprise B 120, and responses to direct questions posed to the target enterprise during a visit thereto.

Of the above, the financial accounting report 140 of the target enterprise 110 is produced with the cooperation of an accounting firm 120 commissioned by the target enterprise 110, and if the accounting firm 120 judges that the financial accounting report of the target enterprise is correct, the target enterprise receives a certification of the properness and appropriateness thereof, and makes the report public.

The financial accounting report 140 of the target enterprise 110 is generated and publicized at the end of each fiscal period, these being generated once each year, or twice each year, once for the first half, and once for the second half of the fiscal period in the case of many target enterprises 110.

An example of the financial accounting report 140 of the target enterprise 110 that can be easily obtained by the corporate rating business entity 100 as specific materials is the stock report (required, for example, by the Japanese government).

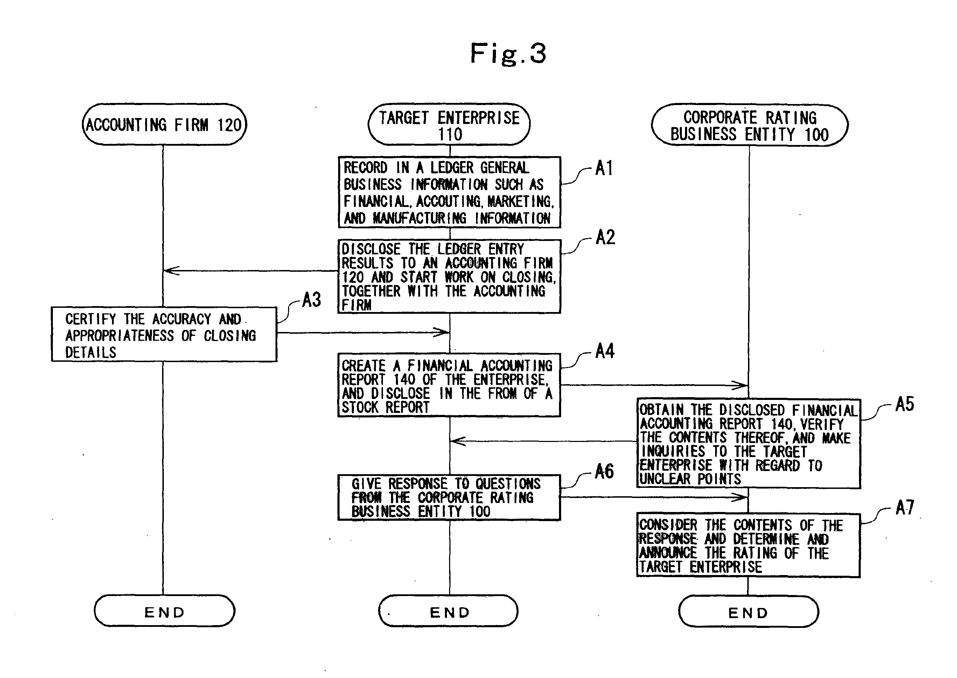

Fig. 3 is a flowchart showing the general operating procedure for the above-noted method of corporate rating of the past, in which a target enterprise 110 enters general business activity information with regard to the target enterprise, such as financial, accounting, marketing, and manufacturing, into a ledger provided within the target enterprise 110, and stores the contents thereof (step A1).

Next, when a prescribed end of a business term arrives, the target enterprise 110 discloses the results of entries into the ledger to an accounting firm 120, and sets about together with the accounting firm to perform the task of closing the books, so as to generate a financial accounting report proposal (step A2).

After the above, the accounting firm 120 issues a document that certifies the accuracy and appropriateness of the details of the closing and the financial accounting report (step A3).

Then, the target enterprise 110 generates a formal financial accounting report of the target enterprise, and obtains a signature from the accounting firm 120 to attest to its accuracy and appropriateness, and discloses this report in the form of a stock report (step A4).

The corporate rating business entity 100 obtains the financial accounting report issued by the target enterprise 110, verifies its content, and uses the method of inquiring about any unclear points by visiting or via the telephone with the target enterprise 110 (step A5).

After the above, the target enterprise 110 makes a response to the questions from the corporate rating business entity 100 (step A6).

Finally, the corporate rating business entity 100 considers the response from the target enterprise., and decides and announces a rating (step A7).

In the corporate rating method of the past, however, the information that can be referenced by the corporate rating business entity when determining the rating is limited to the information provided by a target enterprise in response to questions from the corporate rating business entity, and publicly available information.

Thus, although as seen from the corporate rating business entity, which wishes to increase the credibility of the rating, there is a desire to obtain detailed fiscal period business activity information, to enable a multifaceted analysis of, for example, an enterprise's expected order inflow, it was not possible to satisfy this desire, and there was not a good method of verifying the truthfulness of the responses given to the corporate rating business entity by a target enterprise.

Accordingly, it is an object of the present invention to improve on the above-noted drawbacks in the prior art, by providing a corporate rating system and corporate rating method, whereby a corporate rating business entity can obtain the required broad-ranging information regarding target enterprise, which was not available in the past, this information being used as a reference, thereby greatly improving the credibility of the rating.

### SUMMARY OF THE INVENTION

To achieve the above-noted objects, the present invention adopts the following basic technical constitution.

Specifically, a first aspect of the present invention is a corporate rating system, wherein a corporate rating business entity in the business of performing corporate ratings, one or a plurality of enterprises having a prescribed contractual relationship with the corporate rating business entity and desiring a corporate rating of itself, and an application service provider (ASP) are electrically and mutually connected via an appropriate communication circuit, and wherein business information indicating general business activities, including at least financial, accounting, and tax information for each target enterprise is stored at the ASP separately for each target enterprise, this system having a function whereby the corporate rating business entity obtains required information with regard to a target enterprise in the above-noted contractual relationship desiring a corporate rating from the ASP and performs a corporate rating for the target enterprise using an unique corporate rating software.

A second aspect of the present invention is a corporate rating method, wherein a corporate rating business entity in the business of performing corporate ratings, one or a plurality of enterprises having a prescribed contractual relationship with corporate rating business entity and desiring a corporate rating of itself, and an application service provider (ASP) are mutually and electrically connected via an appropriate communication circuit, this method having
a step of each the target enterprise minimally transmitting to the ASP via the communication terminal thereof at an appropriate interval business information indicating general business activities, such as financial, accounting, and tax information for their own enterprises, so as to maintain at all times an updated condition within the ASP of latest business information with regard to each the target enterprise;
a step of the target enterprise viewing or downloading from the ASP via its own terminal the business information with regard to its own enterprise;
a step of the corporate rating business entity accessing the ASP, and viewing or downloading via a terminal of the corporate rating business entity a part or all of information stored in the ASP regarding an enterprise desiring a corporate rating;
a step of the corporate rating business entity using proprietary corporate rating software that it has to execute an evaluation of the viewed or downloaded information regarding the target enterprise, and executing a prescribed corporate rating with respect to the target enterprise; and
a step of the corporate rating business entity disclosing results of the corporate rating to the public, and
being executed via a computer.

By adopting the above-noted technical constitution, a system and method for corporate rating with regard to, for example, the ability of the enterprise to make payment with respect to its debts and bonds according to the present invention, makes particular use of the Internet or the like to accumulate activities information with regard to a target enterprise at an ASP, this information being referenced by corporate rating business entity in determining a rating for the target enterprise.

Additionally, because the present invention enables each target enterprise to consign the storage and management of information regarding its own finances, accounting, business, and manufacturing and the like to an ASP, the corporate rating business entity can reference information stored at the ASP with regard to business information about various activities of a target enterprise, without disclosing this information publicly, something that was not possible in the past, thereby enabling an improvement in the credibility of the corporate rating.

### BRIEF DESCRIPTION OF THE DRAWING

Fig. 1 is a block diagram showing the configuration of an embodiment of a corporate rating system according to the present invention.

Fig. 2 is a block diagram showing the configuration of corporate rating system in the past.

Fig. 3 is a flowchart illustrating the general operating procedure in a corporate rating method of the past.

Fig. 4 is a block diagram showing an example in which the corporate rating system according to the present invention is implemented via the Internet.

Fig. 5 is a flowchart illustrating the general operating procedure in a corporate rating method according to the present invention.

Fig. 6 is a flowchart illustrating the general operating procedure in another embodiment of a corporate rating method according to the present invention.

Fig. 7 is a flowchart illustrating the general operating procedure in yet another embodiment of a corporate rating method according to the present invention.

### DETAILED DESCRIPTION OF THE PREFERRED EMBODIMENTS

Embodiments of a corporate rating system and corporate rating method according to the present invention are described in detail below, with references made to relevant accompanying drawings.

Specifically, Fig. 1 is a block diagram showing the configuration of an embodiment of a corporate rating system according to the present invention. This drawing shows a corporate rating system 1, in which a corporate rating business entity 200, one or a plurality of target enterprises 210 having a prescribed contractual relationship with the corporate rating business entity and desiring a corporate rating of their own enterprise, and an application service provider (ASP) 240 are mutually electrically connected via an appropriate communication circuit 230, business information indicating general business activities 210, including at least financial, accounting, and tax information for each target enterprise being stored at the ASP 240 separately for each of the target enterprises, and the corporate rating business entity 200 having proprietary corporate rating software, wherein the corporate rating business entity 200 obtains required information with regard to a target enterprise 210 in the above-noted contractual relationship desiring a corporate rating from the ASP 240 and uses its proprietary corporate rating software to perform rating of each target enterprise 210.

There is no particular restriction placed on the corporate rating software used in the present invention, and it is desirable that each corporate rating business entity 200 use s its proprietary program, and while many of these are undisclosed, it is possible to use an evaluation criterion known as DE ratio.

That is, in a corporate rating system 1 according to the present invention, it is desirable that the operation of transferring business information indicating general business activities of each target enterprise 210 via the communication circuit, for example via the Internet, to the ASP and storing same in the ASP as well as the operation of the corporate rating business entity 200 performing a corporate rating with respect to each target enterprise 210 be performed as processing by a computer.

In recent years, enterprises have actively adopted the concept of outsourcing, and as a part of that concept have come to directly input business information, including information such as finances, accounting, marketing, and production planning information with regard to the target enterprise to an application service provider (ASP) 240, these being stored therein.

In this environment, each enterprise treats the ASP as part of its accounting department, and stores all necessary information at the ASP, so that the enterprise can download information required for internal or external use from the ASP, enabling required information and documents such as stock reports, tax and accounting reports and the like to be generated.

Thus, important information about an enterprise is thus stored at the ASP, and in the present invention the ASP is effectively used to implement a system for performing corporate rating having a high degree of credibility.

In the present invention, the ASP 240 can be directly managed by the corporate business entity 200 or managed by a separate business entity.

Specifically, individual contracts are established between the corporate rating business entity 200, the individual target enterprises 210 desiring a corporate rating, and an ASP 240, the target enterprise 210 storing the above-noted business information with regard to their company at the ASP 240, and performing constant updating, deletion, and correction processing of this information, so as to maintain it as the latest business information, and allowing business information with regard to their companies to be read from the ASP at any time.

It is desirable that the ASP 240, within the limits of its storage capacity, store past business information as well for each target enterprise 210.

Additionally, the target enterprise 210 enters into a contract with the ASP 240, so that when the corporate rating business entity 200 accesses the ASP 240 and makes a request for viewing or downloading of business information stored thereat, it is possible for the corporate rating business entity 210 to do so.

The ASP 240 is configured so as to generate a file of business information for each of the target enterprise 210 desiring a corporate rating, and store and manage these files and, based on priorly established contracts with these enterprises, provide business information with regard to target enterprises 210 when requested to do so by the corporate rating business entity 200.

The corporate rating business entity 200 in the present invention, pursuant to the above-noted contract, reads from the ASP 240 the business information of each enterprise 210 desiring a corporate rating, performs an analysis using this information, and generates prescribed rating results, and gives notification to each of the target enterprises of the results, either directly or via the Internet.

That is, because the present invention is configured so as to assure the corporate rating business entity 200 only can use the business information regarding each individual target enterprise 210 having such contract with corporate rating business enterprise 200 and stored at an ASP 240, without disclosing it publicly other than between a target enterprise desiring a corporate rating, in performing the various above-noted information transmittal operations, in order to prevent unauthorized access or improper leakage of business information, of course, it is necessary to use a strict security system, including identification codes and ID numbers for each target enterprise, and an encoding means or the like.

In the corporate rating system 1 of the present invention, it is further desirable that the accounting firm 220 be electrically connected to the communication circuit 230.

That is, while the accounting firm 220 of course must also have entered into a contract with the above-noted parties, it is desirable that the accounting firm 220 download, via its own terminal, general business activity information, such as financial, accounting, and tax information with regard to the target enterprise 210 from the ASP 240 and, perform an evaluation of the details of the enterprises closing based on the downloaded information, issue an electronic signature certifying the accuracy and appropriateness thereof, and send the electronic signature to the ASP 240.

It is desirable that the corporate rating business entity 200 be configured so as to further reference the electronic signature stored in the ASP 240, and performs a corporate rating of a prescribed enterprise 210.

Additionally, the ASP 240 can have a function whereby in the case in which an electronic signature certifying the accuracy and appropriateness of the above-noted closing is received, a notification of this fact is made to both the enterprise 210 and the corporate rating business entity 200.

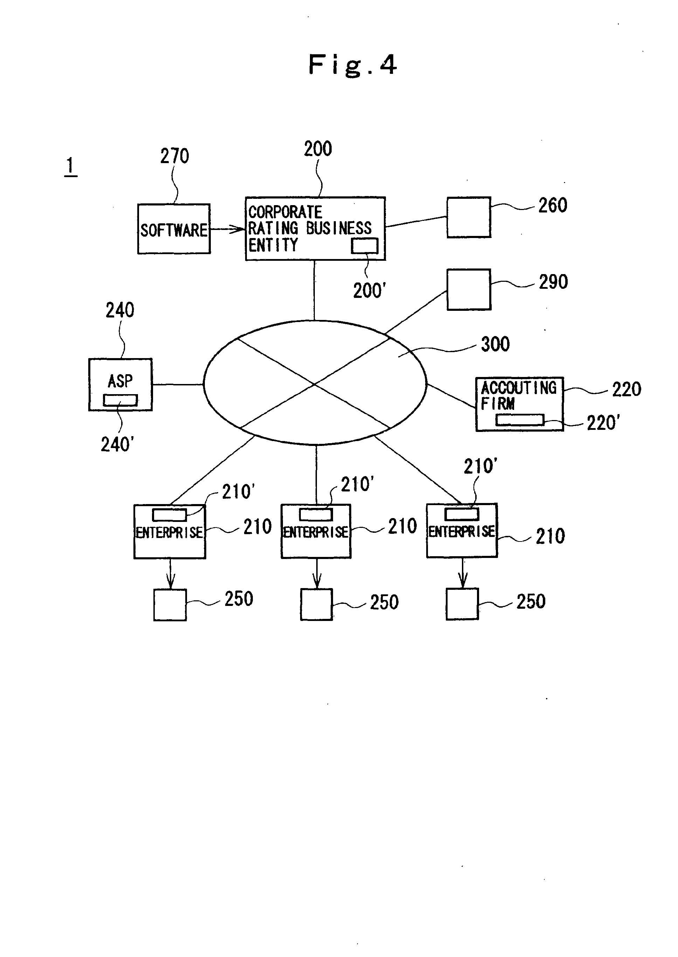

Fig. 4 is a block diagram showing an embodiment in which the corporate rating system 1 according to the present invention is implemented via the Internet 300.

In Fig. 4, the reference numeral 270 denotes corporate rating software proprietarily owned by the corporate rating business entity 200, and the reference numeral 290 denotes a billing system that manages payment for expenses incurred with regard to this system.

More specifically with regard to the corporate rating system 1 of the present invention, in the corporate rating system 1 activity information of a target enterprise 210 is stored at an ASP server 240', which either is operated by the corporate rating business entity 200 or is operated independently from the corporate rating business entity 200.

Each target enterprise 210 desiring a corporate rating stores activity information, such as financial, accounting, sales, and manufacturing information regarding the target enterprise in the ASP 240, and the target enterprise 210, the accounting firm 220, and the corporate rating business entity 200 have a means of obtaining the contents of the ASP 240.

A corporate rating method according to the present invention basically has a step of each target enterprise 210 desiring a corporate rating storing activity information in an ASP 240, a step of the accounting firm 220 certifying the accuracy and appropriateness of the financial accounting report of the activity information at the ASP server 240', and a step of the corporate rating business entity 200 obtaining activity information from the ASP server 240' for use in determining a corporate rating.

Specifically, a corporate rating method according to the present invention is a method wherein a corporate rating business entity 200 engaging in the business of performing corporate rating, one or a plurality of target enterprises 210 having a prescribed contractual relationship with the corporate rating business entity, and an application service provider (ASP) 240 are mutually electrically connected via a communication circuit 230, this method having
a step of each target enterprise 210 minimally transmitting to the ASP 240 via the communication circuit 230 at an appropriate interval business information indicating general business activities, such as financial, accounting, and tax information for their own enterprises, so as to maintain at all times the updated condition within the ASP of the latest business information with regard to each target enterprise,
a step of the target enterprise 210 viewing or downloading from the ASP 240 via its own terminal the business information with regard to its own enterprise,
a step of the corporate rating business entity 200 accessing the ASP 240, and viewing or downloading via a terminal of the corporate rating business entity 200 a part or all of information stored in the ASP 240 regarding an enterprise desiring a corporate rating,
a step of the corporate rating business entity 200 using proprietary corporate rating software that it has to execute an evaluation of the viewed or downloaded information regarding a target enterprise 210, and executing a prescribed corporate rating with respect to the target enterprise, and
a step of the corporate rating business entity 200 disclosing the results of the corporate rating,
the above-noted step being executed by a computer.

In the present invention, an accounting firm 220 having a contractual relationship with the corporate rating business entity 200 and the target enterprise 210 is also connected to the communication circuit 230 via its own terminal.

The accounting firm 220 a function of executing a step of viewing or downloading via its own terminal part or all the information stored at the ASP 240 with regard to a target enterprise 210 desiring a corporate rating, and a step of executing an evaluation of details of the closing account of the target enterprise, based on the viewed or downloaded information regarding the target enterprise, issuing an electronic signature certifying the accuracy and appropriateness of the closing account details, and storing the electronic signature at the ASP 240.

It is desirable that the corporate rating business entity 200, in the step of performing a corporate rating with respect to a prescribed enterprise, considers the evaluation of the closing account details of the enterprise issued by the accounting firm 220.

It is desirable in a corporate rating method according to the present invention that a step by added whereby each target enterprise 210 individually accesses the ASP 240, and uses its own business activities and the electronic signature issued by the accounting firm 220 to create a financial accounting report and stock report.

A specific embodiment of the above-noted corporate rating method according to the present invention is described in detail below, with reference made to the drawings.

An embodiment of a corporate rating system according to the present invention if formed by a corporate rating business entity terminal 200', a target enterprise terminal 210', a accounting firm terminal 220', a communication network 330 such as the Internet, an ASP 240 operated by the corporate rating business entity, a financial accounting report 250 of a target enterprise, and a rating of a target enterprise.

The corporate rating business entity terminal 200' has a function of making a request to an ASP server 240', which is either operated by the corporate rating business entity 200 or operated by an enterprise independently of the corporate rating business entity 200.

The corporate rating business entity terminal 200' further has a function of receiving content that is sent from an ASP server 240', which is either operated by the corporate rating business entity 200 or operated by an enterprise independently of the corporate rating business entity 200.

The target enterprise terminal 210' has a function of recording on the ASP server 240' general business information such as financial, accounting, marketing, and manufacturing information of the target enterprise on an ASP server 240' operated by the corporate rating business entity.

The target enterprise terminal 210' further has a function of obtaining from the ASP server 240' activities information for the purpose of creating a financial accounting report 250.

The accounting firm terminal 220' has a function of requesting activity information of the target enterprise from the ASP server 240'.

The accounting firm terminal 220' also has a function of certifying the accuracy and appropriateness of details of closing, and send a certifying signature to an ASP server 240' operated by the corporate rating business entity.

The ASP server has a function of storing activity information send from the target enterprise 210.

The ASP server also has a function of sending activity information of the target enterprise requested from the accounting firm terminal 220' to the accounting firm terminal 220'.

The ASP server also has a function of reporting to the corporate rating business entity terminal 200' and to the target enterprise terminal 210' the certifying signature received from the accounting firm terminal 220' with respect to the target enterprise activity information.

The ASP server also has a function of sending to the corporate rating terminal 200' activity information of a target enterprise requested by the corporate rating business entity terminal 200'.

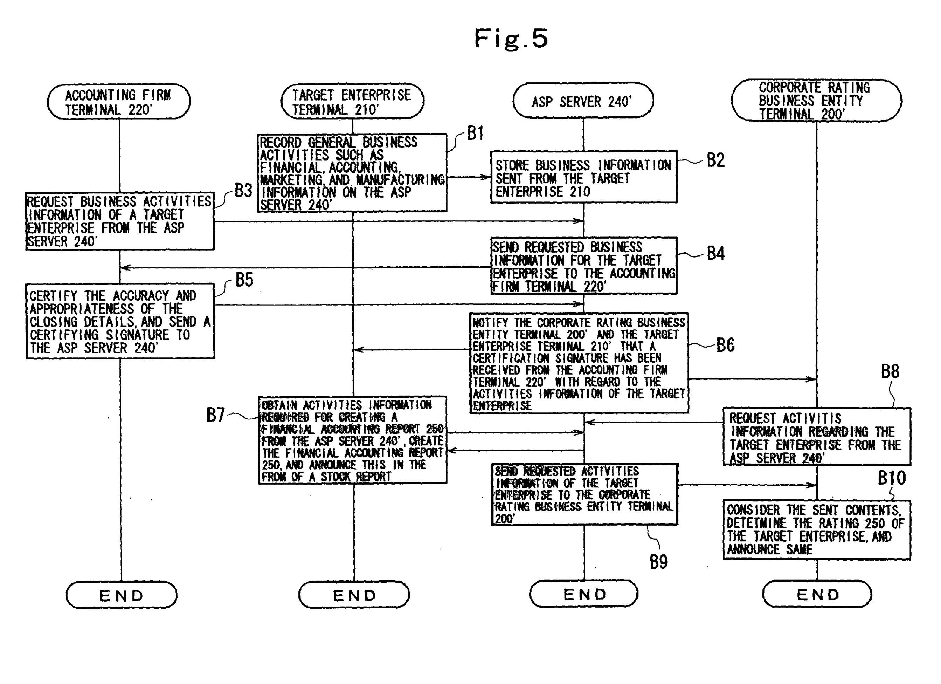

Next, an operating procedure in a corporate rating method according to the present invention is described in detail below, with references made to Fig. 4 and Fig. 5.

In the description that follows, the network 230 is the Internet 300.

Referring to Fig. 5, employees of each area of the target enterprise 210, such as the financial area, the accounting area, the marketing area, and the manufacturing area use target enterprise terminals 220 installed in each area to successively record general business activities to the ASP server 240' via the network 300.

When the above is done, the employees perform the recording task without being particularly aware of the location or the operator of the ASP server 240', using their in-house EDP environment (step B1).

The ASP server 240' automatically stores activity information sent from the target enterprise 210. When this is done, depending upon the data sent, the data content at the ASP server 240' is added to, changed, or deleted (step B2).

At the end of a fiscal period, in order to perform an accounting audit of the target enterprise 210, the accounting firm 220 uses the accounting firm terminal 220' to request activity information of the target enterprise 210 from the ASP server 240' (step B3).

The ASP server 240' sends the activity information of the target enterprise 210 from the accounting firm terminal 220' to the accounting firm terminal 220'. Of this information, the content actually sent as a response is limited to the information required for the accounting audit, and data within the ASP server 240' is already processed into the form of closing data (step B4).

The accounting firm 220 verifies the accuracy and appropriateness of the closing account details and, to certify this, sends a certifying electronic signature to the ASP server 240' (step B5).

The ASP server 240' reports to the corporate rating business entity terminal 200' and the target enterprise terminal 210' that the certifying signature has arrived from the accounting firm terminal 220' with regard to the activity information of the target enterprise 210.

By doing the above, the target enterprise 210 recognizes that the closing data stored within the ASP server 240' is suitable and usable for an actual closing and a financial accounting report, and decides to create a financial accounting report for submission.

The corporate rating business entity 200 recognizes that the data stored within the ASP server 240' is suitable and usable for a corporate rating, and decides to begin the corporate rating task.

Additionally, when this occurs, data that can be used for judgments by the corporate rating business entity is not limited to the information that is planned for inclusion into the financial accounting report, but also includes diverse activity information, such as financial, accounting, marketing, and manufacturing information. It is therefore possible to use a prediction of the target enterprise performance for the next fiscal term as an element in making judgments (step B6).

The target enterprise 210, in creating a final financial accounting report, obtains the required activity information from the ASP server 240', creates a financial accounting report 250, and issues this in the form of a stock report. While the act of obtaining this performed by the target enterprise terminal 210', subsequent tasks are performed cooperatively by an employee of the target enterprise and the accounting firm 220.

It should be noted, however, that the verification of accuracy and appropriateness of the contents has already been done at step B5, so that the task is focused on formatting (step B7).

The corporate rating business entity 200 uses the corporate rating business entity terminal 200' to request activity information of the target enterprise from the ASP server 240'. What is requested at this time is not only an already disclosed financial accounting report, but also a diverse range of activity information, such as financial, marketing, and sales information regarding the target enterprise 210 (step B8).

The ASP server 240' sends to the corporate rating business entity terminal 200' the requested activity information regarding the target enterprise 210 (step B9).

The corporate rating business entity 200 analyzes the activity information of the target enterprise via its corporate rating business entity terminal 200', determines a rating 260 for the target enterprise 210, and announces same, either via the Internet 300 or by means of a document (step B10).

As described above, in this embodiment of the present invention, unlike in the past, it is possible for only the corporate rating business entity to use various business information with regard to a target enterprise that is stored within an ASP in determining a corporate rating, without publicly disclosing this information, thereby achieving an improvement in the credibility of the rating.

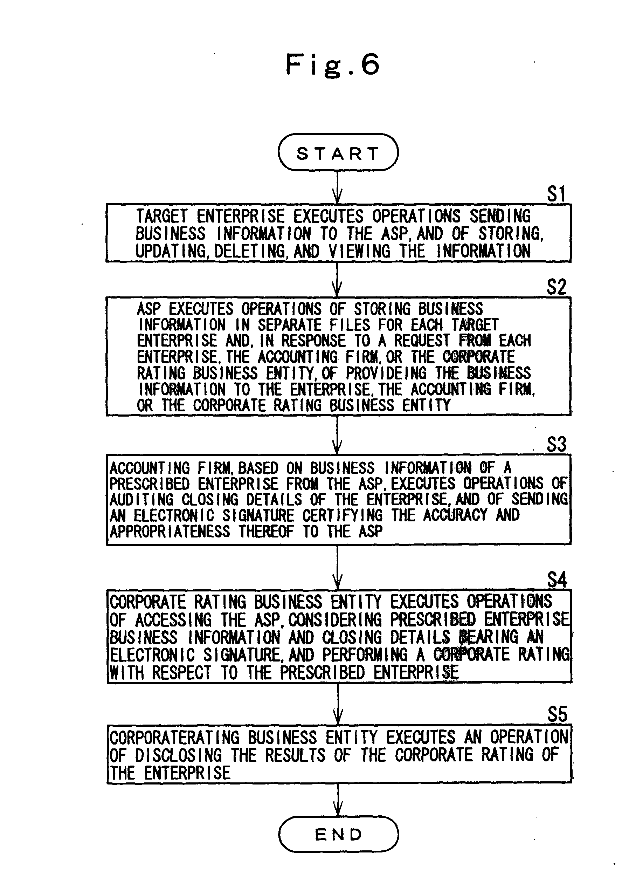

A specific embodiment of a method for corporate rating according to the present invention, as shown in Fig. 6, in which a corporate rating business entity in the business of performing corporate rating, one or a plurality of target enterprises desiring a corporate rating and having a prescribed contractual relationship with the corporate rating business entity, an accounting firm, and an application service provider (ASP) are mutually electrically connected via the Internet, this method having
a first step (step1) of an enterprise desiring its own rating minimally transmitting to the ASP via a terminal of its own general business information, such as its financial, accounting, and tax information, so as to store this information within the ASP, and performing tasks of updating, deleting, or viewing this information,
a second step (step2) of the ASP storing various business information sent to it from each target enterprise in separate files for each target enterprise and, in the case in which there is a request from a target enterprise, the accounting firm, or the corporate rating business entity, providing the business information regarding a prescribed target enterprise to the prescribed target enterprise, the accounting firm, or the corporate rating business entity,
a third step (step3) of the accounting firm, based on the prescribed business information provided by the ASP, auditing and evaluating the closing account details of the target enterprise and, in the case in which the accuracy and appropriateness of the closing account details of the target enterprise have been verified, transmitting an electronic signature certifying the accuracy and appropriateness of the closing account details of the target enterprise to the ASP,
a fourth step (step4) of the corporate rating business entity accessing the ASP, considering business information and closing account details bearing an electronic signature regarding a prescribed target enterprise viewed or downloaded from the ASP, and using corporate rating software proprietarily held by the corporate rating business entity to perform a corporate rating with regard to the prescribed target enterprise,
a fifth step (step5) of the corporate rating business entity disclosing the results of the corporate rating regarding the target enterprise.

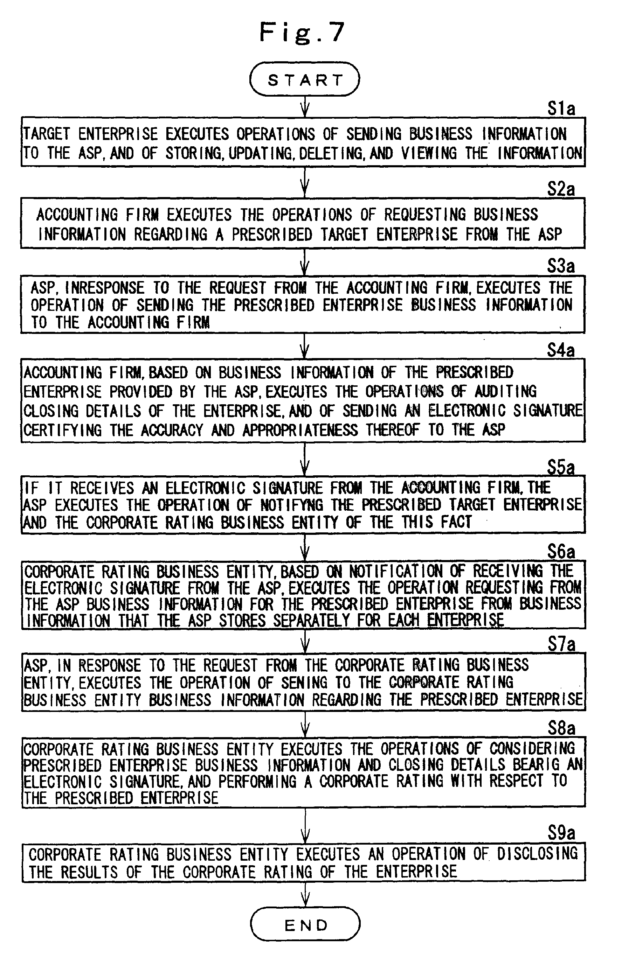

Another specific embodiment of a corporate rating method according to the present invention, as shown in Fig. 7, in which a corporate rating in the business of performing corporate rating, one or a plurality of target enterprises desiring a corporate rating and having a prescribed contractual relationship with the corporate rating business entity, an accounting firm, and an application service provider (ASP) are mutually electrically connected via the Internet, has
a first step (step1a) of an enterprise desiring its own rating minimally transmitting to the ASP via a terminal of its own general business information, such as its financial, accounting, and tax information, so as to store this information within the ASP, and performing tasks of updating, deleting, and viewing this information,
a second step (step2a) of the accounting firm requesting business information regarding a prescribed target enterprise from the ASP,
a third step (step3a) of the ASP, in response to a request from the accounting firm, providing business information of the prescribed target enterprise to the accounting firm,
a fourth step (step 4a) of the accounting firm, based on the business information of the prescribed target enterprise provided from the ASP, auditing and evaluating the associated closing account details and, in the case in which the accuracy and appropriateness thereof have been verified, transmitting to the ASP an electronic signature certifying the accuracy and appropriateness of the associated closing account details,
a fifth step (step 5a) of the ASP, in the case in of receiving from the accounting firm an electronic signature of the accounting firm with regard to the closing account details of the prescribed enterprise, notifying the prescribed enterprise and the corporate rating business entity of this fact,
a sixth step (step6a) of the corporate rating business entity, based on notification of receiving an electronic signature from the ASP, making a request to the ASP 240 for provision of the business information stored separately for each target enterprise by the ASP with regard to the prescribed enterprise,
a seventh step (step7a) of the ASP, in response to the request from the corporate rating business entity, providing the business information regarding the prescribed enterprise to the corporate rating business entity,
an eighth step (step8a) of the corporate rating business entity considering the business information regarding the prescribed enterprise and the closing account details having an electronic signature obtained from the ASP, and using corporate rating software that the corporate rating business entity proprietarily owns to perform a corporate rating with regard to the prescribed enterprise, and
a ninth step (step9a) of the corporate rating business entity disclosing the results of the corporate rating with regard to the enterprise,
the above-noted step being controlled by a computer.

Another embodiment of a corporate rating method according to the present invention is a recording medium onto which is recorded a program for execution by computer of a corporate rating method in which a corporate rating business entity in the business of performing corporate rating, one or a plurality of target enterprises desiring a corporate rating and having a prescribed contractual relationship with the corporate rating business entity, and an application service provider (ASP) are mutually electrically connected via the Internet, having
a step of each target enterprise minimally transmitting via its terminal to the ASP at an appropriate interval business information indicating its general business activities, such as financial, accounting, and tax information, and maintaining the updated condition thereof, so that the business information indicates the business activities for each enterprise at all times,
a step of the target enterprise viewing or downloading its own business information from the ASP at any time, via its own terminal,
a step of the corporate rating business entity accessing the ASP, and viewing or downloading part or all of the information stored in the ASP with regard to an enterprise desiring a corporate rating via a terminal of the corporate rating business entity,
a step of the corporate rating business entity using corporate rating software it owns proprietarily to execute an analysis and evaluation of information it viewed or downloaded with regard to an enterprise, and executing a prescribed corporate rating with regard to the enterprise, and
a step of the corporate rating business entity disclosing the results of the corporate rating,
or a corporate rating method in which a corporate rating business entity in the business of performing corporate rating, one or a plurality of target enterprises desiring a corporate rating and having a prescribed contractual relationship with the corporate rating business entity, an accounting firm, and an application service provider (ASP) are mutually electrically connected via the Internet, this method having
a first step of an enterprise desiring its own rating minimally transmitting to the ASP via a terminal of its own general business information, such as its financial, accounting, and tax information, so as to store this information within the ASP, and performing tasks of updating, deleting, and viewing this information,
a second step of the ASP storing various business information sent to it from each target enterprise in separate files for each target enterprise and, in the case in which there is a request from a target enterprise, the accounting firm, or the corporate rating business entity, providing the business information regarding a prescribed target enterprise to the prescribed target enterprise, the accounting firm, or the corporate rating business entity,
a third step of the accounting firm, based on the prescribed business information provided by the ASP, auditing and evaluating the closing account details of the target enterprise and, in the case in which the accuracy and appropriateness of the closing account details of the target enterprise have been verified, transmitting an electronic signature certifying the accuracy and appropriateness of the closing account details of the target enterprise to the ASP,
a fourth step of the corporate rating business entity accessing the ASP, considering business information and closing account details bearing an electronic signature regarding a prescribed target enterprise viewed or downloaded from the ASP, and using corporate rating software proprietarily held by the corporate rating business entity to perform a corporate rating with regard to the prescribed target enterprise, and
a fifth step of the corporate rating business entity disclosing the results of the corporate rating regarding the target enterprise.

Another embodiment of a corporate rating method according to the present invention is a recording medium onto which is recorded a program for execution by a computer of a corporate rating method in which a corporate rating business entity in the business of performing corporate rating, one or a plurality of target enterprise desiring a corporate rating and having a prescribed contractual relationship with the corporate rating business entity, an accounting firm, and an application service provider (ASP) are mutually electrically connected via the Internet, this method having
a first step (step1a) of an enterprise desiring its own rating minimally transmitting to the ASP via a terminal of its own general business information, such as its financial, accounting, and tax information, so as to store this information within the ASP, and performing tasks of updating, deleting, and viewing this information,
a second step (step2a) of the accounting firm requesting business information regarding a prescribed target enterprise from the ASP,
a third step (step3a) of the ASP, in response to a request from the accounting firm, providing business information of the prescribed target enterprise to the accounting firm,
a fourth step (step 4a) of the accounting firm, based on the business information of the prescribed target enterprise provided from the ASP, auditing and evaluating the associated closing account details and, in the case in which the accuracy and appropriateness thereof have been verified, transmitting to the ASP an electronic signature certifying the accuracy and appropriateness of the associated closing account details,
a fifth step (step 5a) of the ASP, in the case of receiving from the accounting firm an electronic signature of the accounting firm with regard to the closing account details of the prescribed enterprise, notifying the prescribed enterprise and the corporate rating business entity of this fact,
a sixth step (step6a) of the corporate rating business entity, based on notification of receiving an electronic signature from the ASP, making a request to the ASP 240 for provision of the business information stored separately for each target enterprise by the ASP with regard to the prescribed enterprise,
a seventh step (step7a) of the ASP, in response to the request from the corporate rating business entity, providing the business information regarding the prescribed enterprise to the corporate rating business entity,
an eighth step (step8a) of the corporate rating business entity considering the business information regarding the prescribed enterprise and the closing account details having an electronic signature obtained from the ASP, and using corporate rating software that the corporate rating business entity proprietarily owns to perform a corporate rating with regard to the prescribed enterprise, and
a ninth step (step9a) of the corporate rating business entity disclosing the results of the corporate rating with regard to the enterprise.

By adopting the technical constitution described in detail above, a corporate rating system and method according to the present invention achieve a number of effects.

The first effect achieved by the present invention is that, unlike in the past, only the corporate rating business entity can use various business information stored at an ASP as reference information, without disclosing the information publicly.

The second effect achieved by the present invention is that of improving the openness of the auditing process conducted by the accounting firm. The reason for this is that, compared with the technology of the past, it is difficult in the case of the present invention for a target enterprise or the accounting firm to improperly alter activity information.

The third effect achieved by the present invention is that of reducing the scale of the tasks performed by the target enterprise and the accounting firm with regard to closing, not thereby enabling only quick completion, but also improving the accuracy thereof. The reason for this is that, by using an application package software operating on the ASP, it is possible not only to achieve stable operation but also to eliminate programming errors, thereby enabling the performance of the closing processing.

The fourth effect achieved by the present invention is that of improving the evaluation of a target enterprise's shares and other instruments in the market. The reason for this is that only an enterprise capable of providing the corporate rating business entity with business activity information, being open and confident in its accuracy, and completely familiar with international business would make use of the present invention.

## Claims

1. A corporate rating system, wherein a corporate rating business entity in a business of performing corporate ratings, one or a plurality of enterprises having a prescribed contractual relationship with said corporate rating business entity and desiring a corporate rating of itself, and an application service provider (ASP) are mutually electrically connected via an appropriate communication circuit, and wherein business information indicating general business activities, including at least financial, accounting, and tax information for each target enterprise is stored at said ASP separately for each said target enterprise, said system comprising a function whereby said corporate rating business entity having an unique corporate rating software, obtains required information with regard to said target enterprise in said contractual relationship desiring a corporate rating from said ASP and performs a corporate rating for said target enterprise using corporate rating software.

2. A corporate rating system according to claim 1, wherein said operation of transferring to and storing in said ASP business information indicating general business activities of each enterprise and said operation of performing a corporate rating with respect to each said enterprise at said corporate rating business entity are performing as processing by a computer.

3. A corporate rating system according to claim 1, wherein an accounting firm is electrically connected to said communication circuit.

4. A corporate rating system according to claim 3, wherein said accounting firm views or downloads business information indicating general business activities, such as financial, accounting, and tax information of each target enterprise, using a terminal of said accounting firm from said ASP and, based on said business information, evaluates details of closing account of said enterprise, issues an electronic signature certifying the accuracy and appropriateness of details of closing account of said enterprise, and stores said electronic signature at the ASP.

5. A corporate rating system according to claim 4, wherein said corporate rating business entity refers an electronic signature stored at said ASP, and executes a corporate rating evaluation of a prescribed enterprise.

6. A corporate rating method wherein a corporate rating business entity engaging in a business of performing corporate rating, one or a plurality of target enterprises having a prescribed contractual relationship with said corporate rating business entity, and desiring a corporate rating of itself and an application service provider (ASP) are mutually electrically connected via a communication circuit, said method comprising:
a step of each said target enterprise minimally transmitting to said ASP via said communication circuit at an appropriate interval business information indicating general business activities, such as financial, accounting, and tax information for their own enterprises, so as to maintain at all times an updated condition within said ASP of latest business information with regard to each said target enterprise;
a step of said target enterprise viewing or downloading from said ASP via its own terminal said business information with regard to its own enterprise;
a step of said corporate rating business entity accessing said ASP, and viewing or downloading via a terminal of said corporate rating business entity a part or all of information stored in said ASP regarding an enterprise desiring a corporate rating;
a step of said corporate rating business entity using proprietary corporate rating software that it has to execute an evaluation of said viewed or downloaded information regarding said target enterprise, and executing a prescribed corporate rating with respect to said target enterprise; and
a step of said corporate rating business entity disclosing results of said corporate rating to the public,
said step being executed via a computer.

7. A corporate rating method according to claim 6, wherein an accounting firm which having a prescribed contractual relationship with a corporate rating business entity and an enterprise is electrically connected to said communication circuit.

8. A corporate rating method according to claim 7, wherein said accounting firm views or downloads a part of or all of the business information indicating general business activities of each target enterprise, stored in said ASP from said ASP using a terminal of said accounting firm, and based on said business information viewed or downloaded therein, evaluates details of closing account of said enterprise, issues an electronic signature certifying the accuracy and appropriateness of details of closing account of said enterprise, and stores said electronic signature at the ASP.

9. A corporate rating method according to claim 6, wherein said corporate rating business entity, in said step of executing a prescribed corporate rating with respect to said enterprise, considers said evaluation of closing account details of said enterprise made by said accounting firm and executes said corporate rating.

10. A corporate rating method according to claim 6, wherein said ASP is placed under the control of said corporate rating business entity.

11. A corporate rating method according to claim 6, wherein said communication circuit is the Internet.

12. A corporate rating method according to claim 6, further comprising a step of each said target enterprise separately accessing said ASP, and using its own business activities and said electronic signature issued by said accounting firm in creating a financial accounting report and a stock report.

13. A corporate rating method wherein a corporate rating business entity in a business of performing corporate rating, one or a plurality of target enterprises desiring a corporate rating and having a prescribed contractual relationship with said corporate rating business entity, an accounting firm, and an application service provider (ASP) are mutually electrically connected via the Internet, said method comprising:
a first step of an enterprise desiring its own corporate rating minimally transmitting to said ASP via a terminal of its own general business information, such as its financial, accounting, and tax information, so as to store said information within said ASP, and performing tasks of updating, deleting, or viewing said information;
a second step of said ASP storing various business information sent to it from each said target enterprise in separate files for each said target enterprise and, in a case in which there is a request from a target enterprise, said accounting firm, or said corporate rating business entity, providing said business information regarding a prescribed target enterprise to said prescribed target enterprise, said accounting firm, or said corporate rating business entity;
a third step of said accounting firm, based on said prescribed business information provided by the ASP, auditing and evaluating closing account details of said target enterprise and, in a case in which the accuracy and appropriateness of said closing account details of the target enterprise have been verified, transmitting an electronic signature certifying said accuracy and appropriateness of said closing account details of said target enterprise to said ASP;
a fourth step of said corporate rating business entity accessing said ASP, considering said business information and said closing account details bearing said electronic signature regarding a prescribed target enterprise viewed or downloaded from said ASP, and using corporate rating software proprietarily held by said corporate rating business entity to perform a corporate rating with regard to said prescribed target enterprise; and
a fifth step of said corporate rating business entity disclosing results of said corporate rating regarding said target enterprise.

14. A corporate rating method wherein a corporate rating business entity in a business of performing corporate rating, one or a plurality of target enterprises desiring a corporate rating and having a prescribed contractual relationship with the corporate rating business entity, an accounting firm, and an application service provider (ASP) are mutually electrically connected via the Internet, said corporate rating method comprising:
a step 1a of an enterprise desiring its own rating minimally transmitting to said ASP via a terminal, its own general business information showing its general business activities, such as its financial, accounting, and tax information, so as to store said information within said ASP, and performing tasks of updating, deleting, or viewing said information;
a step 2a of said accounting firm requesting said ASP to provide business information regarding a prescribed target enterprise;
a step 3a of said ASP, in response to a request from said accounting firm, providing business information of said prescribed target enterprise to said accounting firm;
a step 4a of said accounting firm, based on said business information of said prescribed target enterprise provided from said ASP, auditing and evaluating associated closing account details and, in the case in which the accuracy and appropriateness thereof have been verified, transmitting to said ASP an electronic signature certifying said accuracy and appropriateness of said associated closing account details;
a step 5a of the ASP, in a case of receiving from said accounting firm an electronic signature of said accounting firm with regard to said closing account details of said prescribed enterprise, notifying said prescribed enterprise and said corporate rating business entity of said fact;
a step 6a of said corporate rating business entity, based on notification of receiving an electronic signature from said ASP, making a request to said ASP for provision of as business information stored separately for each target enterprise by said ASP with regard to said prescribed enterprise;
a step 7a of said ASP, in response to said request from said corporate rating business entity, providing said business information regarding said prescribed enterprise to said corporate rating business entity;
a step 8a of said corporate rating business entity considering said business information regarding said prescribed enterprise and said closing account details having an electronic signature obtained from said ASP, and using corporate rating software that said corporate rating business entity proprietarily owns to perform a corporate rating with regard to said prescribed enterprise; and
a step 9a of said corporate rating business entity disclosing results of said corporate rating with regard to said enterprise,
said step being controlled by a computer.

15. A recording medium onto which is recorded a program for execution by computer of a corporate rating method wherein a corporate rating business entity in a business of performing corporate rating, one or a plurality of target enterprises desiring a corporate rating and having a prescribed contractual relationship with said corporate rating business entity, and an application service provider (ASP) are mutually electrically connected via the Internet, this method comprising:
a step of each target enterprise minimally transmitting via its terminal to the ASP at an appropriate interval business information indicating its general business activities, such as financial, accounting, and tax information, and maintaining an updated condition thereof, so that said business information indicates said business activities for each enterprise at all times;
a step of the target enterprise viewing or downloading its own business information from said ASP at any time, via its own terminal;
a step of said corporate rating business entity accessing said ASP, and viewing or downloading part or all of said information stored in said ASP with regard to an enterprise desiring a corporate rating via a terminal of said corporate rating business entity;
a step of said corporate rating business entity using corporate rating software it owns proprietarily to execute an analysis and evaluation of information it viewed or downloaded with regard to an enterprise, and executing a prescribed corporate rating with regard to said enterprise; and
a step of said corporate rating business entity disclosing results of said corporate rating.

16. A recording medium onto which is recorded a program for execution by a computer of a corporate rating method wherein a corporate rating business entity in a business of performing corporate rating, one or a plurality of target enterprises desiring a corporate rating and having a prescribed contractual relationship with said corporate rating business entity, an accounting firm, and an application service provider (ASP) are mutually electrically connected via the Internet, said method comprising:
a first step of an enterprise desiring its own rating minimally transmitting to said ASP via a terminal, its own general business information indicating its general business activities, such as its financial, accounting, and tax information, so as to store said information within said ASP, and performing tasks of updating, deleting, or viewing said information;
a second step of said ASP storing various business information sent to it from each said target enterprise in separate files for each said target enterprise and, in a case in which there is a request from either one of said target enterprise, said accounting firm, or said corporate rating business entity, providing said business information regarding a prescribed target enterprise to any one of said prescribed target enterprise, said accounting firm, or said corporate rating business entity;
a third step of said accounting firm, based on said prescribed business information provided by said ASP, auditing and evaluating closing account details of said target enterprise and, in a case in which the accuracy and appropriateness of said closing account details of said target enterprise have been verified, transmitting an electronic signature certifying said accuracy and appropriateness of said closing account details of the target enterprise to said ASP;
a fourth step of said corporate rating business entity accessing said ASP, considering business information and closing account details bearing an electronic signature regarding a prescribed target enterprise viewed or downloaded from said ASP, and using corporate rating software proprietarily held by said corporate rating business entity to perform a corporate rating with regard to said prescribed target enterprise; and
a fifth step of said corporate rating business entity disclosing results of said corporate rating regarding said target enterprise.

17. A recording medium onto which is recorded a program for execution by a computer of a corporate rating method wherein a corporate rating business entity in a business of performing corporate rating, one or a plurality of target enterprise desiring a corporate rating and having a prescribed contractual relationship with said corporate rating business entity, an accounting firm, and an application service provider (ASP) are mutually electrically connected via the Internet, said method comprising:
a step 1a of an enterprise desiring its own rating minimally transmitting to said ASP via a terminal, its own general business information indicating its general business activities thereof, such as its financial, accounting, and tax information, so as to store said information within said ASP, and performing tasks of updating, deleting, or viewing said information;
a step 2a of said accounting firm requesting said ASP to provide business information regarding a prescribed target enterprise;
a step 3a of said ASP, in response to a request from said accounting firm, providing business information of said prescribed target enterprise to said accounting firm;
a step 4a of said accounting firm, based on said business information of said prescribed target enterprise provided from said ASP, auditing and evaluating associated closing account details and, in a case in which the accuracy and appropriateness thereof have been verified, transmitting to said ASP an electronic signature certifying said accuracy and appropriateness of said associated closing account details;
a step 5a of said ASP, in a case of receiving from said accounting firm an electronic signature of said accounting firm with regard to said closing account details of said prescribed enterprise, notifying said prescribed enterprise and said corporate rating business entity of said fact;
a step 6a of said corporate rating business entity, based on notification of receiving an electronic signature from said ASP, making a request to said ASP for provision of said business information stored separately for each target enterprise by said ASP with regard to said prescribed enterprise;
a step 7a of said ASP, in response to said request from said corporate rating business entity, providing said business information regarding said prescribed enterprise to said corporate rating business entity;
a step 8a of said corporate rating business entity considering said business information regarding said prescribed enterprise and said closing account details having an electronic signature obtained from said ASP, and using corporate rating software that said corporate rating business entity proprietarily owns performing a corporate rating with regard to said prescribed enterprise; and
a step 9a of said corporate rating business entity disclosing results of said corporate rating with regard to said enterprise.
